# EUROPEAN PATENT APPLICATION

(11) **EP 2 833 005 A1**
(43) Date of publication of application: **04.02.2015**
(21) Application number: 12882626.0
(22) Date of filing: 10.08.2012
(51) Int. Cl.: F16B 15/08

(54) **CONNECTING BODY FOR NAILS**

(71) Applicant: TOTAL FASTENING CO., LTD., Koriyama-shi Fukushima 963-0204 (JP)
(72) Inventor: OUCHI, Masatoshi, Koriyama-shi, Fukushima 962-0204 (JP); HAYASHI, Yukie, Koriyama-shi, Fukushima 962-0204 (JP); SUGITA, Saburo, Atsugi-shi, Kanagawa 243-0033 (JP); HANAZAWA, Tsutomu, Sagamihara-shi, Kanagawa 252-0302 (JP)
(74) Representative: 2K Patentanwälte Blasberg Kewitz & Reichel
(86) International application number: PCT/JP2012/070534
(87) International publication number: WO 2014/024314

(57) **Abstract**

Provided is a connecting body for nails, including a large number of nails that are arrayed in parallel to each other at regular intervals and each include a shank portion welded to two wires crossing the large number of nails respectively at two positions spaced apart from each other in a direction of an axial line of the shank portion so that the large number of nails are connected to each other. A diameter of each of the two wires is set to be sufficiently smaller than a diameter of each of the large number of nails. The shank portion of the each of the large number of nails includes vertical ribs formed at a position of a welded portion on an outer periphery of the shank portion so as to protrude along the direction of the axial line of the shank portion. Outer surfaces of the two wires are welded to the vertical ribs of the large number of nails.

## Description

### Technical Field

The present invention relates to a connecting body for nails, which is to be loaded for use in a nailing machine capable of successively driving nails (including screw nails), and more particularly, to a connecting body for nails, which is enhanced in reliability of welded portions between nail and metal wires (hereinafter also referred to as "wires").

### Background Art

Hitherto, there have been provided connecting bodies for nails, which include a large number of nails held in parallel to each other through intermediation of shank portions thereof that are welded and connected to wires (metal wires) (refer to, for example, Patent Literatures 1 and 2).

In the "screw ring nails and connecting body therefor" described in Patent Literature 1, orthogonally to an axial line of a screw nail, a ring process is executed on two upper and lower parts in a direction of the axial line. Then, a large number of rings are formed apart from each other in the direction of the axial line so that the rings serve as engagement teeth that are opposite to a pull-out direction. Two wires are welded respectively thereto. In this way, strength of wire welded portions is increased.

Next, as for the "screw nail connecting body" described in Patent Literature 2, a screw portion is provided over the entire length of each nail, and two wires are welded out of protruding threads of the screws.

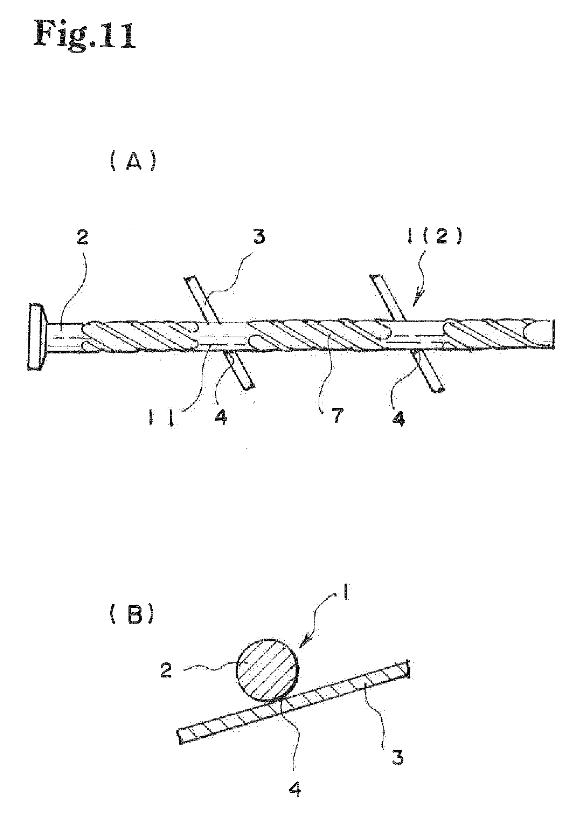

In addition, in order to increase welding strength, mass-produced and commercially available connected nails are formed as illustrated in FIG. 11(A). Specifically, a head portion is provided at one end of a shank portion 2, and a pointed distal end portion is provided at another end. Further, screw portions 7a with four to five threads are provided on an outer periphery of the shank portion 2. Apart from each other on upper and lower sides of the shank portion 2, sectional circular portions 11 are formed out of the screw portions 7a. As illustrated in FIG. 11(B), only the sectional circular portions 11 are held in contact with wires 3, and welded portions 4 are formed at those contact portions.

### Citation List

### Patent Literature

[PTL 1] JP 3147209 Y2
[PTL 2] JP 3116910 Y2

### Summary of Invention

### Technical Problems

The nails described in Patent Literature 1 include the large number of rings that are formed at the two positions of each of the shank portions thereof, and are welded to the wires through intermediation of the ring portions by resistance welding. This connecting body for the nails is preferred because welding strength between the nails and the wires (metal wires) is significantly high. The welding strength is increased presumably because the welded portions between the nails and the wires bite into grooves between the rings.

However, there have been found problems in that, at the time of driving of the nails of the connecting body for nails, stress concentrates on the valley portions (grooves) between the ring portions. Thus, the nails are liable to be bent, buckled, or broken at those portions.

Further, in a case where the wires are directly welded to helical rib parts of the screw nails, the welding strength at the welded portions may be significantly reduced, or welding itself may not be performed. The screw nails are each formed by rolling on an outer periphery of a wire material.

In a case where the shank portion of such nail screws are welded to the two wires by resistance welding, even when an ideal welded portion is formed between one side of the shank portion and one of the wires 3, another of the wires is disengaged from the ribs due to the helical shape of the ribs. As a result, welding cannot be perfectly performed. Further, a welding length between the ribs and the wire is small, and hence welding strength is consequently reduced.

Next, the connecting body for the commercially available nails, in which wires are welded to the sectional circular portions, has problems as follows.

There is a disadvantage in that, when the connecting body for nails is received in a magazine of a nailing machine and a trigger of the nailing machine is pulled, the wires are separated from the nails and bounce back toward an operator of the nailing machine due to low welding strength between the nails and the wires. In a case where the welding strength is lowest, the wires are separated at the moment when the nails are ejected from the nailing machine. Specifically, when the connected nails are ejected from the nailing machine, the wires are cut between the nails. In order to cut the wires, an external force is applied to the wires, which causes the welded portions to be separated.

Next, in a case where the nails are ejected from the nailing machine and driven into timber such as plywood, the wires welded to the nails may be separated from the nails due to resistance against the plywood.

Those disadvantages are each caused by insufficient strength at the welded portions between the wires and the nails. When the welded portion is expanded at the time of welding, welding current is distributed to each portion, and hence sufficient welding heat for melting metal is not generated presumably. The insufficiency of the welding heat is caused by a significant difference in diameter between the nails and the wires. For example, the diameter of the nails is set to approximately 3 mm, and the diameter of the wires is set approximately to 0.7 mm. When the wires are softened and the welded portions are flattened at the time of welding, a contact surface between the wires and the nails becomes larger. With this, first, electric current is distributed, and electric current density decreases at each part of the welded portions. As a result, the metal is difficult to melt. In addition, generated heat is distributed to the nail side, and hence a temperature increase is suppressed.

In view of the above-mentioned circumstances, according to the present invention, it devised to increase electric current density and prevent release of generated heat to a nail side as much as possible, to thereby secure sufficient welding strength between wires and the nails. Further, the present invention provides a connecting body for nails, which is capable of overcoming the disadvantage in Patent Literature 1. That is, the present invention provides a connecting body for nails having sufficiently high buckling strength.

### Solution to Problem

In order to solve the above-mentioned problems, according to claim 1 of the present invention, there is provided a connecting body for nails, including a large number of nails each including:
a head portion;
a shank portion; and
a pointed distal end portion,
the shank portion being welded and connected to a metal wire so that the large number of nails are held in parallel to each other,
in which a diameter of the metal wire is set to be sufficiently smaller than a diameter of the shank portion of each of the large number of nails,
in which the shank portion of the each of the large number of nails includes a vertical rib portion including a plurality of vertical ribs formed so as to protrude along a direction of an axial line of the shank portion, the vertical rib portion being formed at a position of a welded portion on an outer periphery of the shank portion, and
in which the large number of nails are welded and connected to the metal wire through intermediation of the vertical rib portion of the shank portion.

With this configuration, the large number of nails are welded and connected to the metal wire through intermediation of the plurality of vertical ribs of the vertical rib portion. Thus, welding current concentrates only on positions of the plurality of vertical ribs, and hence metal is intensivelymolten. As a result, firm welded portions can be formed. Specifically, density of welding current is higher than that of related-art connecting bodies for connected nails that are welded through intermediation of smooth circular portions. Thus, the welded portion is maintained at higher temperature, which allows the large number of nails and the metal wire to be more easilymolten. In this way, firm welding is performed, and reliability of the welded portion can be enhanced. In addition, protrusion of the plurality of vertical ribs on outer surfaces of the large number of nails prevents welding heat from being released toward the large number of nails. With this, at the time when the large number of nails are driven into timber, the metal wire is prevented from bouncing back after separation. As a result, safety of the connecting body for nails can be enhanced.

Further, in a connecting body for nails according to claim 2 of the present invention, the large number of nails are screw nails each including a screw formed on the shank portion.

With this configuration, the screw nails are also welded and connected to the metal wire through intermediation of the vertical rib portion including the plurality of vertical ribs. Thus, as described above, the screw nails are firmly welded and connected.

Further, in a connecting body for nails according to claim 3 of the present invention, the vertical rib portion includes vertical rib portions formed at two positions spaced apart from each other in the direction of the axial line of the shank portion, the metal wire includes two metal wires parallel to each other, and the large number of nails are welded and connected to one of the two metal wires through intermediation of one of the vertical rib portions, and to another of the two metal wires through intermediation of another of the vertical rib portions.

With this configuration, the large number of nails are welded and connected to the two metal wires through intermediation of the vertical rib portions respectively formed at the two positions spaced apart from each other on the shankportion. Thus, the welded portions are firmly formed as described above, and in addition, the large number of nails are connected to the two metal wires. As a result, the large number of nails are more firmly connected, and reliability can be further enhanced. In addition, the large number of nails thus connected are each held in an accurate posture.

Further, in a connecting body for nails according to claim 4 of the present invention, the plurality of vertical ribs of the vertical rib portion are each formed into a helical shape.

Further, in a connecting body for nails according to claim 5 of the present invention, the plurality of vertical ribs of the vertical rib portion, each of which are formed into the helical shape, are formed so as to cross each other in X shapes.

Also in the case where the plurality of vertical ribs of the vertical rib portion are each formed into the helical shape or are formed so as to cross each other in the X shapes, the same functions and advantages as those in claim 1 can be obtained.

Note that, the helical shape conceptually includes a shape in which the plurality of vertical ribs are inclined with respect to an axial line of each of the large number of nails.

Further, in a connecting body for nails according to claim 6 of the present invention, vertical ribs selected from among the plurality of vertical ribs each formed into the helical shape and ribs of the screw of each of the screw nails are continuous with each other.

With this configuration, the large number of nails can be increased in buckling strength, and can be easily manufactured.

Further, a connecting body for nails according to claim 7 of the present invention further includes annular horizontal ribs formed apart from each other in an axial direction at the position of the welded portion of the shank portion in a manner that the annular horizontal ribs cross the axial line of the shank portion, and the plurality of vertical ribs of the vertical rib portion are formed between the annular horizontal ribs.

Also with this configuration, by the plurality of vertical ribs, not only the buckling strength of the large number of nails but also strength at the welded portions can be increased.

Further, in a connecting body for nails according to claim 8 of the present invention, the vertical rib portion at the welded portion includes: the plurality of vertical ribs; and a plurality of vertical grooves, the plurality of vertical ribs and the plurality of vertical grooves being arranged alternately to each other along the direction of the axial line of the shank portion, and the large number of nails are welded and connected to the metal wire through intermediation of the plurality of vertical ribs of the vertical rib portion.

With this configuration, the large number of nails are welded to the metal wire at positions of at least two of the plurality of vertical ribs, which are spaced apart from each other in a circumferential direction of the shank portion. Thus, welding current concentrates on the positions of the at least two of the plurality of vertical ribs spaced apart from each other in the circumferential direction of the shank portion, and hence metal is intensively molten. As a result, a welding length is increased in a direction of an axial line of the metal wire, and welded portions having high strength can be reliably formed.

Further, in a connecting body for nails according to claim 9 of the present invention, the plurality of vertical grooves of the vertical rib portion include: shallow first vertical grooves; and deep second vertical grooves that are deeper than the shallow first vertical grooves, the shallow first vertical grooves and the deep second vertical grooves being arranged alternately to each other circumferentially over an entire outer circumference of the shank portion, and a pitch between the plurality of vertical ribs is set to 1/3 or less of a length L of the welded portion in an axial direction of the metal wire over an entire circumference of the shank portion.

With this configuration, welding with the metal wire can be performed at positions of at least three of the plurality of vertical ribs in the circumferential direction of the shank portion, and welded portions can be formed on both sides of each of the deep second vertical grooves. Thus, welded portions can be formed so as to be longer in the direction of the axial line of the metal wire and to have high strength. Further, electric current density is increased, and heat release toward the large number of nails is suppressed. Thus, melting is more easily caused. As a result, welded portions having high strength can be formed, and reliability of the welded portions can be enhanced.

Further, in a connecting body for nails according to claim 10 of the present invention, depths of deepest vertical grooves out of the plurality of vertical grooves at the welded portion are each set to be 1/3 times to 1 time as large as a thickness V of the welded portion over the entire outer circumference of the shank portion of the each of the large number of nails, and a pitch between the deepest vertical grooves out of the plurality of vertical grooves is set to 1/2 or less of the length L of the welded portion in the direction of an axial line of the metal wire over the entire circumference of the shank portion.

With this configuration, the deep vertical grooves can be perfectly filled with the welded portion, and the welded portion can be formed continuously over the entire length L in the direction of the axial line of the metal wire. In this way, firm welded portions can be formed.

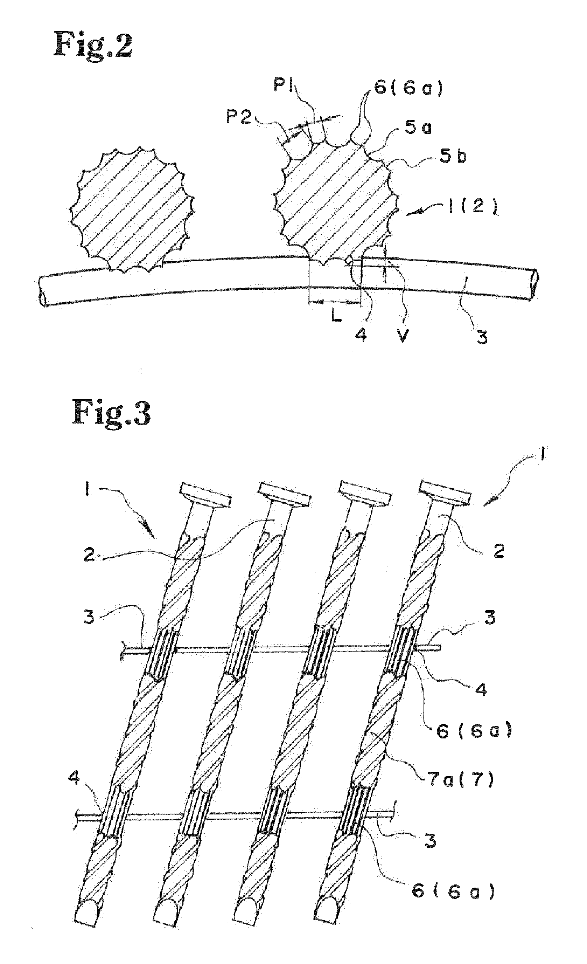

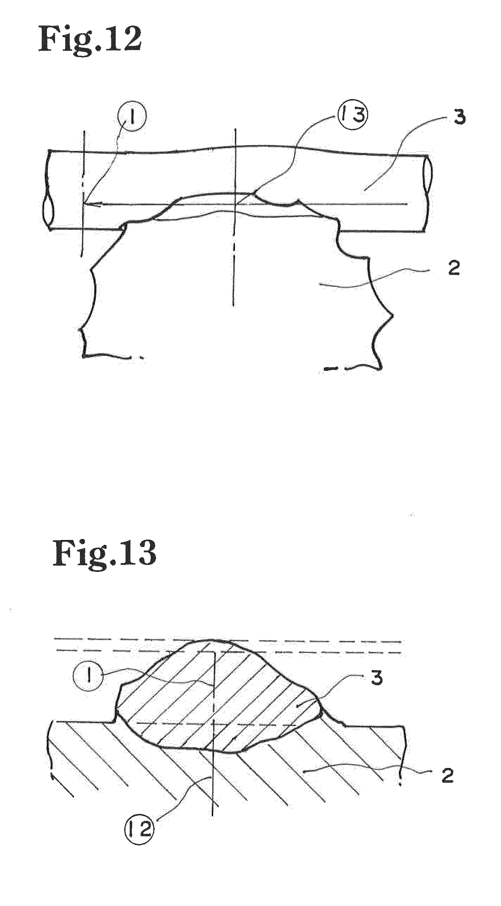

Note that, in the present invention, the welding depth V refers to a distance between an outer peripheral line of the metal wire and a biting line of the shank portion of each of the large number of nails in vertical cross-sections illustrated in FIGS. 2 and 12. The depth V is formed as illustrated in FIG. 2.

Further, the welding length L in the direction of the axial line of the metal wire is illustrated in FIG. 2. The welding length L refers to a length over which the metal wire and the shank portion are perfectly welded to each other (refer to FIG. 12).

### Advantageous Effects of Invention

According to the connecting body for nails of the present invention, the following advantages are obtained.
(1) The large number of nails are welded and connected to the metal wire through intermediation of the plurality of vertical ribs of the vertical rib portion. Thus, welding current concentrates only on positions of the plurality of vertical ribs, and hence metal is intensivelymolten. As a result, firm welded portions are formed. Specifically, density of welding current is higher than that of related-art connecting bodies for connected nails that are welded through intermediation of smooth circular portions. Thus, the welded portion is maintained at higher temperature, which allows the large number of nails and the metal wire to be more easily molten. In this way, firm welding is performed, and reliability of the welded portion can be enhanced. In addition, protrusion of the plurality of vertical ribs on outer surfaces of the large number of nails prevents welding heat from being released toward the large number of nails. With this, at the time when the large number of nails are driven into timber, the metal wire is prevented from bouncing back after separation. As a result, safety of the connecting body for nails can be enhanced.
(2) The screw nails are also welded and connected to the metal wire through intermediation of the vertical rib portion including the plurality of vertical ribs. Thus, as described above, the nails are firmly welded and connected.
(3) The large number of nails are welded and connected to the two metal wires through intermediation of the vertical rib portions respectively formed at the two positions spaced apart from each other on the shankportion. Thus, the welded portions are firmly formed as described above, and in addition, the large number of nails are connected to the two metal wires. As a result, the large number of nails are more firmly connected, and reliability can be further enhanced. In addition, the large number of nails are held by the two metal wires, and hence postures of the large number of nails are stabilized.
(4) Also in the case where the plurality of vertical ribs of the vertical rib portion are each formed into the helical shape or are formed so as to cross each other in the X shapes, the same functions and advantages as those described above in Item (1) can be obtained.
(5) The vertical ribs selected from among the plurality of vertical ribs each formed into the helical shape at the welded portion and the ribs of the screw of each of the screw nails are continuous with each other. Thus, the large number of nails can be increased in buckling strength, and can be easily manufactured.
(6) The annular horizontal ribs are formed apart from each other in the axial direction at the position of the welded portion of the shank portion in a manner that the annular horizontal ribs cross the axial line of the shank portion. The plurality of vertical ribs of the vertical rib portion are formed between the annular horizontal ribs. Thus, by the plurality of vertical ribs, not only the buckling strength of the large number of nails but also the strength at the welded portions can be increased.
(7) The vertical rib portion at the welded portion includes: the plurality of vertical ribs; and the plurality of vertical grooves, the plurality of vertical ribs and the plurality of vertical grooves being arranged alternately to each other along the direction of the axial line of the shank portion. The large number of nails are welded and connected to the metal wire through intermediation of the plurality of vertical ribs of the vertical rib portion. Thus, the large number of nails are welded at the positions of the at least two of the plurality of vertical ribs, which are spaced apart from each other in the circumferential direction of the shank portion. With this, welding current concentrates on the positions of the at least two of the plurality of vertical ribs spaced apart from each other in the circumferential direction of the shank portion, and hence metal is intensively molten. As a result, the welding length is increased in the axial direction of the metal wire, and welded portions having high strength can be formed.
(8) The plurality of vertical grooves of the vertical rib portion include: the shallow first vertical grooves; and the deep second vertical grooves that are deeper than the shallow first vertical grooves, the shallow first vertical grooves and the deep second vertical grooves being arranged alternately to each other circumferentially over the entire outer circumference of the shank portion.
   The pitch between the plurality of vertical ribs is set to 1/3 or less of the length L of the weldedportion in the axial direction of the metal wire over the entire circumference of the shank portion. Thus, welding with the metal wire can be performed at the positions of the at least three of the plurality of vertical ribs in the circumferential direction of the shank portion, and the welded portions can be formed on both the sides of each of the deep second vertical grooves. Thus, welded portions can be formed so as to be longer in the direction of the axial line of the metal wire and to have high strength. Further, electric current density is increased, and heat release toward the large number of nails is suppressed. Thus, melting is more easily caused. As a result, welded portions having high strength can be formed, and reliability of the welded portions can be enhanced.
(9) The depths of the deepest vertical grooves out of the plurality of vertical grooves at the welded portion are each set to be 1/3 times to 1 time as large as the thickness V of the welded portion over the entire outer circumference of the shank portion of the each of the large number of nails. The pitch between the deepest vertical grooves out of the plurality of vertical grooves is set to 1/2 or less of the length L of the welded portion in the direction of the axial line of the metal wire over the entire circumference of the shank portion. Thus, the deep vertical grooves can be perfectly filled with the welded portion, and the welded portion can be formed continuously over the entire length L in the direction of the axial line of the metal wire. In this way, firm welded portions can be formed.

### Brief Description of Drawings

FIG. 1 is a front view of a connecting body for nails according to a first embodiment of the present invention.
FIG. 2 is an explanatory view of welded portions between shank portions and a wire of the connecting body for nails.
FIG. 3 is a front view of a connecting body for nails according to a second embodiment of the present invention.
FIGS. 4(A), 4(B), 4(C), 4(D), and 4(E) are sectional views each illustrating an example of a shape of a vertical rib portion of the shank portion of the nail.
FIG. 5 (A) is a front view of a connecting body for nails according to a third embodiment of the present invention, and FIG. 5(B) is an explanatory sectional view of a connected state of the nail and the wire.
FIG. 6 is a front view of a connecting body for nails according to a modification of the third embodiment of the present invention.
FIG. 7 is a main-part front view of a fourth embodiment of the present invention.
FIG. 8 is a main-part front view of a fifth embodiment of the present invention.
FIG. 9 is a main-part front view of a modification of the fifth embodiment of the present invention.
FIG. 10 is an explanatory view of an example of a method of manufacturing the connecting body for nails.
FIG. 11 (A) is a front view of a related-art connecting body for nails, and FIG. 11(B) is an explanatory sectional view of a connected state of a nail and a wire.
FIG. 12 is a vertical sectional view of a welded portion between the nail and the wire of the present invention, which corresponds to a cross-section parallel to a direction of an axial line of the wire.
FIG. 13 is a sectional view of the welded portion, which is taken along a center line in FIG. 12 and is orthogonal to the axial line of the wire.
FIG. 14 is a sectional view of a welded portion between a nail and a wire of a comparative example (related art), which corresponds to a cross-section parallel to a direction of an axial line of the wire.
FIG. 15 is a sectional view of the welded portion, which is taken along a center line in FIG. 14 and is orthogonal to the axial line of the wire.
FIG. 16 is a graph showing results of a comparison between Vickers hardnesses near points at the time of equally dividing a straight line n parallel to the wire of the connecting body for nails of the present invention, which is illustrated in FIG. 12, into thirteen segments, and equivalents of a comparative example.
FIG. 17 is a graph showing results of a comparison between Vickers hardnesses (circle marks) near points (1) to (12) (circled numbers) at the time of equally dividing a vertical center line of the connecting body for nails of the present invention, which is illustrated in FIG. 13, into twelve segments, and equivalents of the comparative example (square marks).
FIG. 18 is an explanatory view of a test of welding (joining) strength between the nail and the wire.

### Description of Embodiments

Now, detailed description is made of embodiments of the present invention with reference to the drawings.

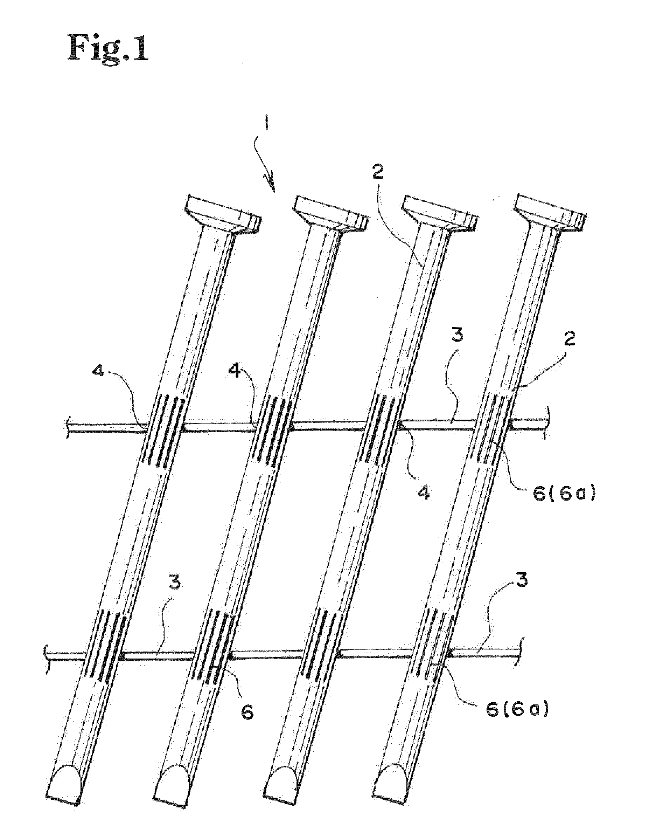

FIG. 1 is a front view of a connecting body for nails according to a first embodiment of the present invention, and FIG. 2 is an explanatory view of welded portions between a metal wire (wire) and the nails.

In the connecting body for nails, which is illustrated in FIG. 1, a plurality of nails 1 each including a head portion, a shank portion 2, and a pointed distal end portion are held in parallel to each other through intermediation of the shank portions 2 that are connected to wires 3 by welding 4. A diameter of each of the wires 3 is set to be sufficiently smaller than a diameter of each of the shank portions 2 of the nails 1. At the welded portion 4 positions on an outer periphery of each of the shank portions 2 of the nails 1, vertical rib portions 6 are each formed so as to include a plurality of vertical ribs 6a that protrude along directions of axial lines thereof, and the nails 1 are welded 4 and connected to the wires 3 through intermediation of the vertical ribs 6a of the shank portion 2.

When the vertical rib portions 6 are welded to the wires 3, welding current concentrates only on positions of the vertical ribs 6a thereof, and hence the metal is intensively molten. As a result, the welded portions 4 are firmly formed. Current density is higher than that of related-art connected nails that are welded through intermediation of smooth circular portions. Thus, the welded portions 4 are maintained at higher temperature, which allows the nails 1 and the wires 3 to be more easily molten. In this way, firm welding is performed. In addition, the protrusion of the vertical ribs 6a on outer surfaces of the shank portions 2 of the nails 1 prevents welding heat from being released to the nail 1 side, which also contributes to the firm welding.

In the first embodiment, the above-mentioned vertical rib portions 6 are formed at two positions spaced apart from each other in a direction of an axial line of the shank portion 2. Two wires 3 are parallel to each other, and the nails 1 are each welded and connected to one of the wires 3 through intermediation of one of the vertical rib portions 6, and welded and connected to another of the wires 3 through intermediation of another of the vertical rib portions 6. In other words, the nails 1 are welded and connected to the two wires 3.

The nails 1 may be welded and connected to a single wire 3, but postures of the nails 1 connected thereto are unstable. When the nails 1 are welded and connected to the two wires 3 parallel to each other through intermediation of the vertical rib portions 6 at the two positions spaced apart from each other, postures of the nails 1 connected thereto are stabilized. With this, the postures are constantly accurately maintained, which is preferred. Postures of the nails 1 connected to three or more wires 3 are stabilized as well. However, the advantage does not become significantly greater irrespective of whether the nails 1 are connected to the two wires 3 or the three or more wires 3. The number of the wires 3 uneconomically increases, and a load for cutting the wires at the time of driving with a nailing machine also increases, which is not preferred. It is preferred that the nails 1 be connected to the two wires 3.

In this example, the diameter of the wire 3 is exemplarily set to approximately 0.7 mm, and a diameter of the shank portion 2 of the nail 1 is exemplarily set to approximately from 2.5 mm to 3.5 mm. The wire 3 is formed of a relatively soft steel wire, and an outer periphery thereof is plated to increase electrical conductivity. The wire 3 has a circular shape in cross-section.

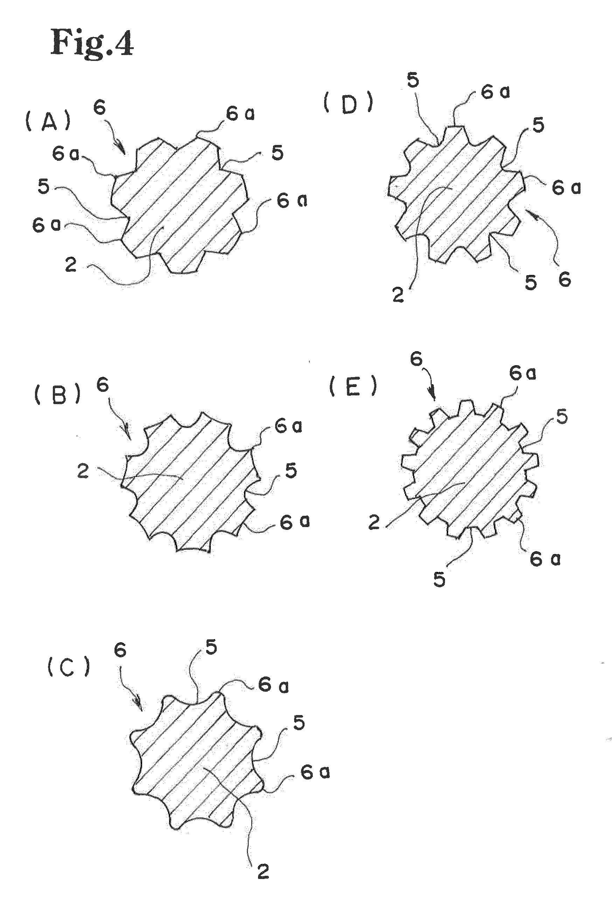

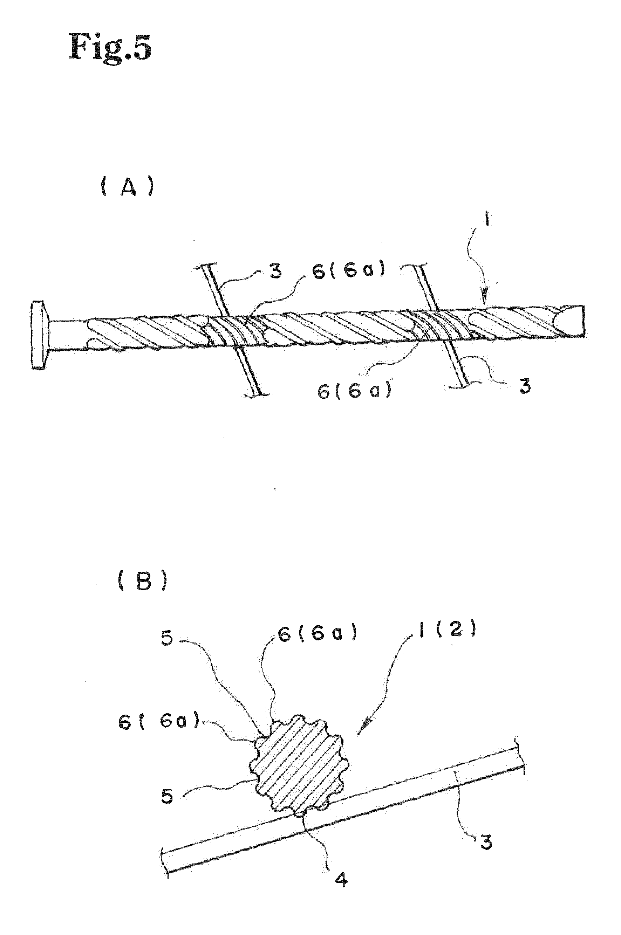

In this embodiment, the vertical ribs 6a of the shank portions 2 of the nails 1 are formed by rolling on an outer periphery of a shank material having a circular shape in cross-section. In this example, as illustrated in FIG. 2, by the rolling, relatively deep vertical grooves 5a (approximately from 0.18 mm to 0.2 mm) and relatively shallow vertical grooves 5b (approximately from 0.05 mm to 0.08 mm) are formed alternately to each other on the outer periphery of the shank portion 2. Specifically, at the time of rolling, along with formation of the deep vertical grooves 5a at regular intervals, a metal material is moved to each side thereof to form the vertical ribs 6a. In this way, the shallow vertical groove 5b and the deep vertical groove 5a are formed on both sides of each of the vertical ribs 6a. As illustrated in FIG. 2, a pitch P1 between the shallow vertical ribs 6 is small and a pitch P2 between the deep vertical ribs 6 is large. Note that, as described below with reference to FIGS. 4(A) to 4(E) and FIG. 5(B), smooth corrugated vertical ribs and vertical grooves may be formed instead of the vertical ribs of the nails of FIG. 2.

The shape of the vertical ribs 6a of the vertical rib portions 6 is not limited to the above-mentioned shape, and various modifications maybe made thereto . FIGS. 4(A) to 4(E) each illustrate an example of the shape of the vertical ribs.

According to the configurations of the vertical grooves 5a and 5b and the vertical ribs 6a illustrated in FIG. 2, as illustrated in FIG. 2, a plurality of the vertical ribs 6a are held in contact with the wire 3 at the welded portion 4, and all of those vertical ribs 6a are molten and welded to the wire 3. Specifically, the electric current concentrates on the positions of the vertical ribs 6a, and the vertical ribs 6a are fused thereby. In this way, welding is performed over the plurality of the vertical ribs 6a, which are held in contact with the wire 3, and hence a welding length L between the shank portion 2 of the nail 1 and the wire 3 is large in a direction of an axial line of the wire 3. In this way, firm welding is performed. In other words, all parts at which the shank portions 2 and the wires 3 are held in contact with each other are welded.

FIG. 3 is a front view of a connecting body for nails according to a second embodiment of the present invention. In the second embodiment, the nails 1 include screw nails.

In this example, in the outer surface of each of the shank portions 2, screws 7 are formed except the two positions in the axial direction. Ribs of the screws 7 are denoted by a reference symbol 7a. In addition, at the two intermediate positions in the axial direction of the shank portion 2, a large number of the vertical ribs 6a are provided instead of the ribs 7a. In this example, the vertical ribs 6a are formed in parallel to the axial line of the shank portion 2. Then, at parts corresponding to the vertical ribs 6a, the wires 3 are joined by resistance welding (electric welding) . With this, the nails 1 are connected to each other with the wires 3. Other features are the same as those in the first embodiment described above with reference to FIG. 1. Thus, the same components are denoted by the same symbols, and detailed description thereof is omitted.

In this way, the screw nails 1 are similarly welded and connected to the wires 3 through intermediation of the vertical rib portions 6 in which the vertical ribs 6a are formed. Thus, as in the first embodiment described above, the screw nails 1 are connected by firm welding.

Further, the vertical ribs 6a of the vertical rib portions 6 of the shank portion 2 described above are formed in parallel to the direction of the axial line of the shank portion 2. However, the present invention is not limited thereto, and modifications may be made thereto without departing from the gist of the present invention.

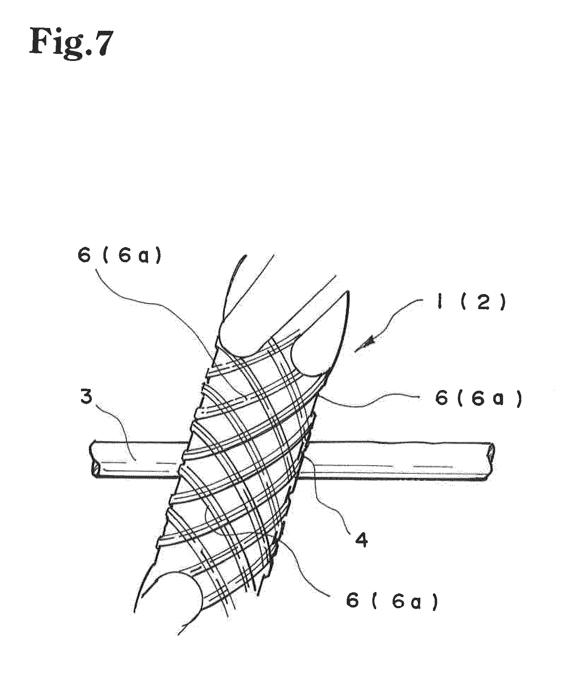

FIGS. 5 illustrate an embodiment in which the vertical rib 6a is formed into a helical shape, and FIG. 7 illustrates an embodiment in which the vertical ribs 6a each formed into the helical shape are formed so as to cross each other in X shapes.

Also when the vertical ribs 6a are formed into the helical shape or so as to cross each other in the X shapes, the same functions and advantages as those in the first embodiment described above are obtained.

Note that, the helical shape conceptually includes a shape in which the vertical ribs 6a are inclined with respect to an axial line of the nail 1.

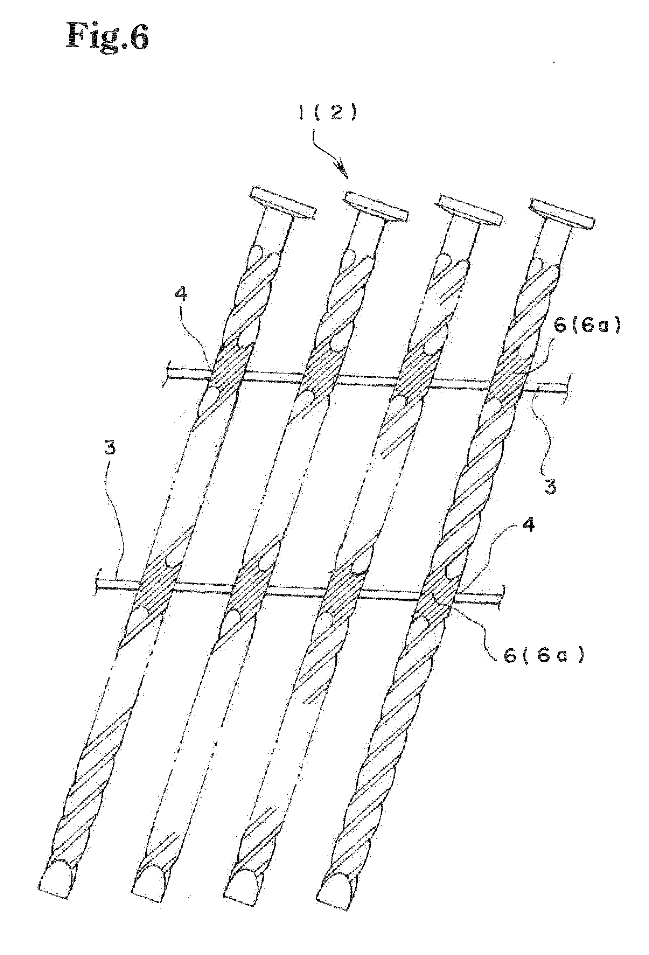

In a case where the vertical ribs 6a of the screw nail 1 are formed into the helical shape, as illustrated in FIG. 6, it is preferred that vertical ribs 6a selected from among the plurality of vertical ribs 6a formed into the helical shape, and the ribs 7a of the screws 7 of each of the screw nails 1 be formed continuously with each other. This is because the screw nails 1 can be increased in buckling strength, and can be easily manufactured.

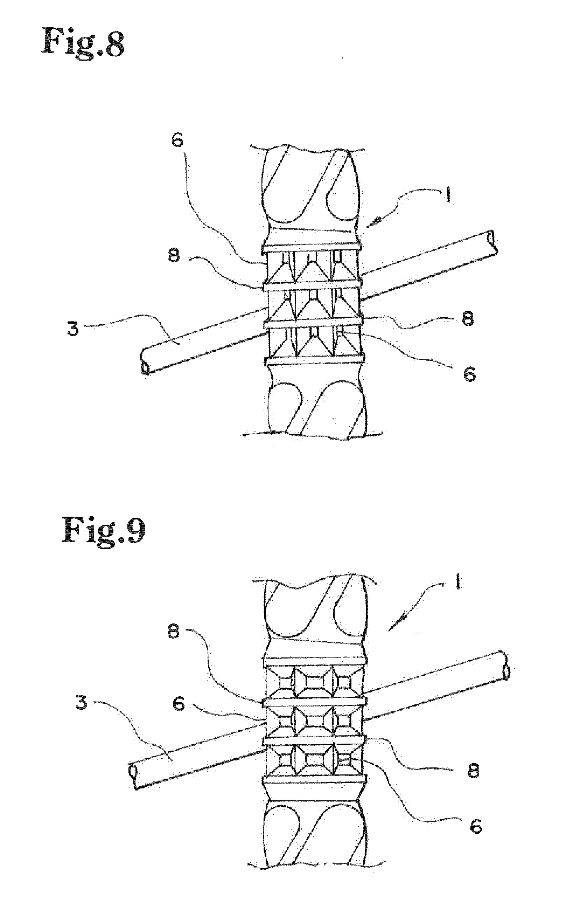

Further, FIG. 8 illustrates an embodiment in which annular horizontal ribs 8 are formed apart from each other in the axial direction at the position of the welded portion of the shank portion 2 in a manner that the annular horizontal ribs 8 cross the axial line of the shank portion 2, and in which the vertical ribs 6a are formed between the horizontal ribs 8 and 8.

FIG. 9 illustrates a modification of the embodiment illustrated in FIG. 8. In FIG. 8, a ring inclined surface at continuous part between the vertical rib portions 6 and the shank portion 2 is provided only on the head portion (upper) side. Meanwhile, in FIG. 9, the ring inclined surface is provided on each of the head portion side and the distal end side of the nail 1.

Also with this configuration, the vertical ribs 6a enable firm welding, to thereby increase not only strength at the welded portions but also the buckling strength.

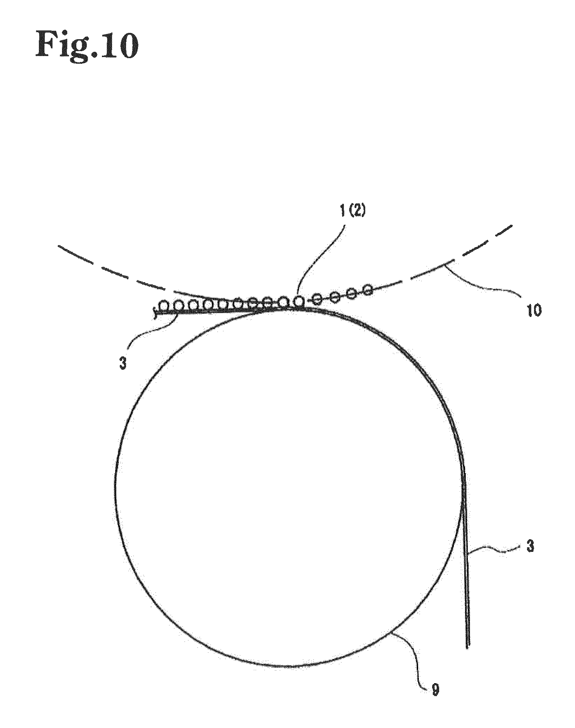

Next, description is made of an example of a method of manufacturing the connecting body for nails with reference to FIG. 10. FIG. 10 is an explanatory view of the method of manufacturing the connecting body for nails.

The nails 1 and the wire 3 are welded to each other with a dedicated electric resistance welding machine as illustrated in FIG. 10.

On outer periphery of a nail feeder 10 having an exemplary diameter of approximately 250 mm, a large number of the nails 1 are held at an exemplary interval of two degrees with respect to a center of the nail feeder 10, and are rotated largely around the center.

Further, the wire 3 is guided along an outer periphery of a wire feeder 9 having an exemplary diameter of approximately 100 mm, and the wire feeder 9 is rotated. Then, at a closest position between the wire feeder 9 and the nail feeder 10, the shank portions 2 of the nails 1 and the wire 3 are brought into press-contact with each other and subjected to electric resistance welding at that position. Specifically, under a state in which a potential difference is generated between the wire feeder 9 and the nail feeder 10, and the wire feeder 9 and the nail feeder 10 themselves are maintained in a cooled state. In this state, the electric resistance welding is performed at the closest position between the wire feeder 9 and the nail feeder 10.

At this time, the diameter of the wire 3 is exemplarily set to 0.79 mm, and a cross-sectional area thereof is 0.49 mm². Then, the nails 1 and the wire 3 are successively fed to the nail feeder 10 and the wire feeder 9. In this way, the connecting body for nails is manufactured.

Note that, two wires 3 are arranged apart from each other in a direction orthogonal to the drawing sheet, and the wires 3 are welded at two positions to the shank portions 2 of the nails 1.

Next, description is made of a comparison between the connecting body for nails of the present invention, which is illustrated in FIGS. 1 and 3 (hereinafter referred to as "connected nails of the present invention"), and a related-art connecting body for nails, which is illustrated in FIGS. 11 (hereinafter referred to as "connected nails of a comparative example") . In the connected nail of the comparative example, which is illustrated in FIG. 11, smooth circular portions 11 on a peripheral surface of the shank portion 2 of the nail 1 are welded and connected to the wires 3.

[Welded cross-sections of connected nail of present invention and connected nail of comparative example]

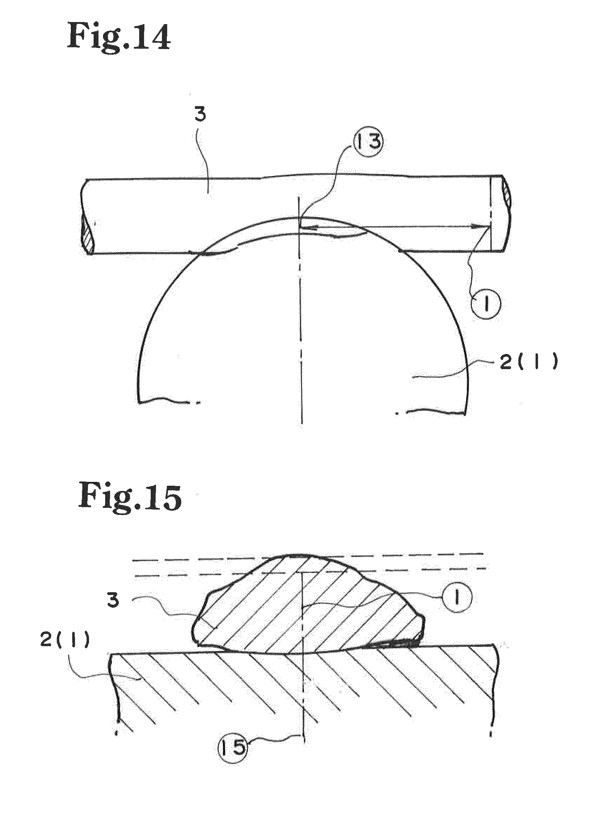

FIGS. 12 to 15 each illustrate a cross-section of a welded portion of the connected nail. FIG. 12 is a vertical sectional view of the welded portion of the connected nail of the present invention, which corresponds to a cross-section parallel to the direction of the axial line of the wire 3. FIG. 13 is a sectional view of the welded portion, which is taken along a center line in FIG. 12 and is orthogonal to the axial line of the wire 3. FIG. 14 is a sectional view of a welded portion of the connected nail of the comparative example, which corresponds to FIG. 12. FIG. 15 is a sectional view of the weldedportion of the connected nail of the comparative example, which corresponds to FIG. 13. FIGS. 12 to 15 are each drawn faithfully based on an enlarged photograph of the welded portion.

### [Comparison between connected nail of present invention and connected nail of comparative example]

First, a comparison is made between FIG. 12 illustrating the cross-section of the welded portion of the connected nail of the present invention, which is parallel to the axial line of the wire 3, and FIG. 14 illustrating the comparative example corresponding thereto.

As clearly understood from FIG. 12, in a region out of the welded portion of the connected nail of the present invention, the large number of deep vertical grooves 5a and shallow vertical grooves 5b are arranged alternately to each other on an outer periphery thereof in cross-section, and the vertical ribs 6a are provided so as to protrude therebetween. However, at the welded portion, all the vertical ribs 6a are molten to form a smooth curve. Electric current concentrates on the positions of the vertical ribs 6a, and the vertical ribs 6a are fused.

The welding length between the shank portion 2 of the nail 1 and the wire 3 is approximately 2 mm in the direction of the axial line of the wire 3 . In addition, all parts at which the shank portion 2 and the wire 3 are held in contact with each other are welded.

Meanwhile, in FIG. 14 illustrating the connected nail of the comparative example, an outer periphery of the sectional circular portion 11 is scarcely molten, and maintains a substantially original circular shape. In addition, in FIG. 14, a conspicuous black straight line appears at a right end of a contact portion between the shank portion 2 and the wire 3, which corresponds to a non-welded portion. Thus, in the case of the connected nail of the comparative example, a substantial welding length in the direction of the axial line of the wire 3 is approximately 1.7 mm.

### [Comparison of horizontal cross-section of welded portion]

Next, FIG. 13 illustrates a cross-section of the connected nail of the present invention, which is taken along the center line in FIG. 12 and is orthogonal to the axial line of the wire 3. FIG. 15 illustrates a cross-section of the connected nail of the comparative example, which corresponds to FIG. 13.

Note that, in FIGS. 13 and 15, the outer periphery of the wire 3 is flattened. This is because, when the wire 3 and the shankportion 2 are welded to each other under a pressed state, the wire 3 is softened by welding current, and deformed and flattened by a pressing force.

When a comparison of the deformed flattened cross-section is made between the present invention and the comparative example, in FIG. 13 illustrating the present invention, the welded portion between the wire 3 and the nail is formed into a circular arc shape. Correspondingly to a length of a curved surface of the circular arc, a welding cross-section line between the shank portion 2 and the wire 3 is formed so as to be long. In addition, welded portions are firmly formed also at both ends in the flattened direction. This is because a surface of the nail is molten and the wire 3 enters the molten portion. In other words, in the present invention, heat release on the nail side is suppressed at the time of welding.

Meanwhile, in FIG. 15 illustrating the comparative example, a welding surface between the nail 1 and the wire 3 is formed into a flat surface, and hence a welding length in the cross-section is smaller than that in the present invention. This is because a large amount of heat is released to the nail side, and hence the nail is less molten. In addition, as clearly understood from FIG. 15, a black line appears at a boundary between both end portions of the wire 3 and the shank portion 2, which corresponds to a non-welded portion.

Thus, it is found that, at the time of driving of the related-art connected nails, stress concentrates on the non-welded portion, which may cause the wire 3 and the shank portion 2 to be easily separated from each other.

### [Comparison of hardness near welded portion]

### [Comparison of vertical cross-section]

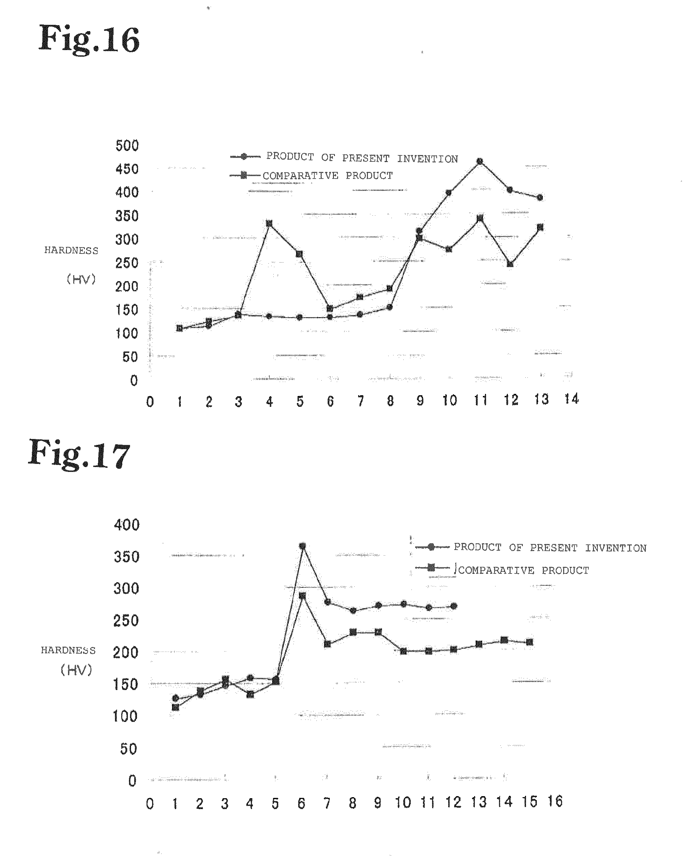

FIG. 16 shows results of a comparison of Vickers hardnesses in a horizontal direction at and near the welded portion in a cross-section parallel to the wire 3 (FIGS. 12 and 14) of each of the present invention and the comparative example. Circle marks represent Vickers hardnesses at the positions in the present invention, and square marks represent those in the comparative example.

Specifically, in the present invention, an area from a point of an arrow 1 to a point of a center line 13 in FIG. 12 is equally divided into thirteen segments, in comparative example, hardnesses are measured near each point of arrows 1 to 13 in FIG. 14. Note that, positions of measurement points in FIG. 16 are shown in Table 1.

**[Table 1]**

| (A) Connected nails of present invention | | | (B) Connected nails of comparative example | | |
|---|---|---|---|---|---|
| X | Y coordinate | Hardness (HV) | | Y coordinate | Hardness (HV) |
| 1 | -2 | 106.697 | 1 | 2 | 107.874 |
| 2 | -1.5 | 111.85 | 2 | 1.5 | 122.374 |
| 3 | -1 | 138.309 | 3 | 1 | 134.435 |
| 4 | -0.899 | 132.829 | 4 | 0.5 | 331.042 |
| 5 | -0.8 | 130.205 | 5 | 0 | 264.082 |
| 6 | -0.7 | 129.174 | 6 | 0.9 | 147.093 |
| 7 | -0.6 | 136.06 | 7 | 0.8 | 172.874 |
| 8 | -0.5 | 149.591 | 8 | 0.7 | 188.846 |
| 9 | -0.4 | 313.082 | 9 | 0.6 | 296.44 |
| 10 | -0.3 | 392.522 | 10 | 0.4 | 273.253 |
| 11 | -0.2 | 459.147 | 11 | 0.3 | 337.299 |
| 12 | -0.1 | 398.009 | 12 | 0.1 | 239.325 |
| 13 | 0 | 379.449 | 13 | 0.2 | 316.88 |

The column (A) in Table 1 shows X coordinates, Y coordinates, and Vickers hardnesses at the measurement points in the present invention, and the column (B) shows those in the comparative example. The area between ends of the arrows denoted by circled reference numerals 1 and 13 in FIGS. 12 and 14 is equally divided into thirteen segments, and respective dividing points are defined as X coordinates 1 to 13 in the horizontal direction. The Y coordinates are defined along a depth orthogonal to the straight line. The Y coordinates are defined because measurement at the measurement points is difficult to perform along a straight line, and hence a welding depth direction (Y-axis) is defined for the sake of convenience of the measurement. Note that, the X coordinates in the present invention are represented as the points 1 to 13 from the left to right in FIG. 12, and the X coordinates in the comparative example are equivalently represented as the points from the right to left in FIG. 14. The points in FIG. 12 are indicated on the left side with respect to the center line, and the points in FIG. 14 are indicated on the right side. However, the right side and the left side are substantially symmetrical to each other with respect to the center line, and hence there is no problem.

This is because, as a result of sampling measurement at a plurality of arbitrary points that are not shown in the table, substantially equal values of hardness are obtained on each of the left and right with respect to the center line. As shown in FIG. 16, results of the comparison between the values of hardness of the present invention and the values of hardness of the comparative example demonstrate the following matters.

In the present invention, the hardness of the wire 3 is substantially uniform at positions out of the welded portions, and the hardness is high at the welded portions.

Meanwhile, in the connected nails of the comparative example, the hardness of the wire 3 is high at non-welded positions. The wire 3 becomes brittler along with an increase in hardness, which may cause breakage at the time of driving with a nailing machine.

Note that, the values with a minus symbol (-) in the columns of the Y coordinate represent positions on a lower side with respect to the straight lines.

### [Comparison of hardness in horizontal cross-section]

Next, FIG. 17 shows results of measurement of Vickers hardnesses at the twelve points and fifteen points. The twelve points and the fifteen points correspond to points at the time of equally dividing, in the depth direction, the area from the point of the arrow 1 to the point of the arrow 12 in FIG. 13 illustrating the present invention, and the area from the point of an arrow 1 to the point of an arrow 15 in FIG. 15 illustrating the comparative example respectively into twelve segments and fifteen segments.

A curved line of the circle marks of the present invention and a curved line of the square marks of the comparative example substantially overlapped each other. Note that, at the respective measurement points, the vertical dividing points are defined as the Y coordinates, and positions shifted in the horizontal direction with respect to the Y-axis are defined as the X coordinates. The values with a minus symbol (-) in the columns of the X coordinate represent positions on the left side with respect to the Y-axis, and the values with a plus symbol + represent the right side.

**[Table 2]**

| (A) Connected nails of present invention | | | (B) Connected nails of comparative example | | |
|---|---|---|---|---|---|
| Y | X coordinate | Hardness (HV) | | X coordinate | Hardness (HV) |
| 1 | -0.271 | 126.187 | 1 | -0.336 | 112.269 |
| 2 | -0.171 | 132.795 | 2 | -0.236 | 138.253 |
| 3 | -0.071 | 146.492 | 3 | -0.136 | 156.116 |
| 4 | 0.071 | 158.856 | 4 | -0.036 | 131.234 |
| 5 | 0.171 | 156.116 | 5 | 0.036 | 151.506 |
| 6 | 0.271 | 364.533 | 6 | 0.137 | 286.113 |
| 7 | 0.371 | 276.356 | 7 | 0.236 | 209.215 |
| 8 | 0.471 | 262.609 | 8 | 0.336 | 228.187 |
| 9 | 0.571 | 270.126 | 9 | 0.436 | 228.199 |
| 10 | 0.671 | 271.648 | 10 | 0.536 | 197.194 |
| 11 | 0.771 | 265.554 | 11 | 0.636 | 198.129 |
| 12 | 0.871 | 267.075 | 12 | 0.753 | 200.061 |
| | | | 13 | 0.858 | 207.107 |
| | | | 14 | 0.95 | 213.431 |
| | | | 15 | 1.084 | 210.288 |

### [Comparison of wire separation strength]

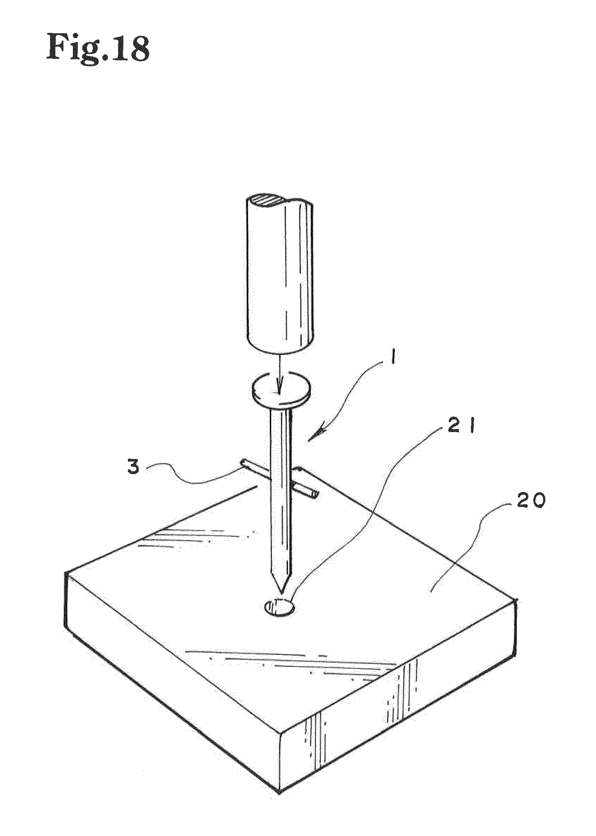

Next, FIG. 18 is an explanatory view of a test of wire separation strength.

In this example, a thick steel plate 20 having a hole 21 with a diameter of 3.2 mm, which is slightly larger than the diameter of the nail 1, is prepared. Then, intermediate portions of the wire for the connected nails, each of which has a shaft diameter of 0.79 mm, are cut between the nails. The wire 3 and the nail 1 are crossed each other in a substantially cross shape, and in this state, the distal end side of the nail 1 is inserted to the hole 21 of the steel plate 20. Next, a nailhead is pressed with a load indicator so as to measure a load value at the time when the wire 3 is separated from the nail 1.

Five connected nails of the comparative example and five connected nails of the present invention were prepared, and respective loads were compared to each other. As a result, an average wire separation load of the connected nails of the comparative example was 285.48 N, and an average load of the present invention was 439.21 N. The comparison therebetween demonstrates that the separation strength of the present invention is at least 50% higher than that of the comparative example.

**[Table 3]**

| | | Maximum load (N) | |
|---|---|---|---|
| | | Connected nails of present invention | Connected nails of comparative example |
| Number of tests | 1 | 468.188 | 246.5 |
| | 2 | 368.813 | 326.313 |
| | 3 | 413.813 | 263.188 |
| | 4 | 521.875 | 341.188 |
| | 5 | 423.375 | 250.187 |
| Average | | 439.21 | 285.48 |

Next, as illustrated in FIGS. 4(A) to 4(E) and FIG. 5(B), nails 1 each including the vertical ribs 6a and the vertical grooves 5, which are variously changed in shape, were manufactured, and a test of welding to the wire 3 was conducted. As a result, the same advantages as those in the first and second embodiments described above were obtained, and the nail 1 and the wire 3 were welded firmly to each other . The vertical grooves 5 correspond to the deep vertical grooves 5a in FIG. 2, and the vertical ribs 6a correspond to protruding portions between the shallow vertical grooves 5b in FIG. 2.

### Reference Signs List

- 1: nail
- 2: shank portion
- 3: metal wire (wire)
- 4: welded portion
- 5: vertical groove
- 5a: deep vertical groove
- 5b: shallow vertical groove
- 6: vertical rib portion
- 6a: vertical rib

## Claims

1. A connecting body for nails, comprising a large number of nails (1) each comprising:
a head portion;
a shank portion (2); and
a pointed distal end portion,
the shank portion being welded and connected to a metal wire (3) so that the large number of nails are held in parallel to each other,
wherein a diameter of the metal wire is set to be sufficiently smaller than a diameter of the shank portion of each of the large number of nails,
wherein the shank portion (6) of the each of the large number of nails comprises a vertical rib portion (6a) including a plurality of vertical ribs (6a) formed so as to protrude along a direction of an axial line of the shank portion (6), the vertical rib portion being formed at a position of a welded portion on an outer periphery of the shank portion, and
wherein the large number of nails are welded and connected to the metal wire through intermediation of the vertical rib portion of the shank portion.

2. A connecting body for nails according to claim 1, wherein the large number of nails comprise screw nails each including a screw formed on the shank portion.

3. A connecting body for nails according to claim 1 or 2,
wherein the vertical rib portion comprises vertical rib portions formed at two positions spaced apart from each other in the direction of the axial line of the shank portion,
wherein the metal wire comprises two metal wires parallel to each other, and
wherein the large number of nails are welded and connected to one of the two metal wires through intermediation of one of the vertical rib portions, and to another of the two metal wires through intermediation of another of the vertical rib portions.

4. A connecting body for nails according to any one of claims 1 to 3, wherein the plurality of vertical ribs of the vertical rib portion are each formed into a helical shape.

5. A connecting body for nails according to claim 4, wherein the plurality of vertical ribs of the vertical rib portion, each of which are formed into the helical shape, are formed so as to cross each other in X shapes.

6. A connecting body for nails according to claim 4 or 5, wherein vertical ribs selected from among the plurality of vertical ribs each formed into the helical shape and ribs of the screw of each of the screw nails are continuous with each other.

7. A connecting body for nails according to any one of claims 1 to 3, further comprising annular horizontal ribs formed apart from each other in an axial direction at the position of the welded portion of the shank portion in a manner that the annular horizontal ribs cross the axial line of the shank portion,
wherein the plurality of vertical ribs of the vertical rib portion are formed between the annular horizontal ribs.

8. A connecting body for nails according to any one of claims 1 to 7,
wherein the vertical rib portion at the welded portion comprises:
the plurality of vertical ribs; and
a plurality of vertical grooves,
the plurality of vertical ribs and the plurality of vertical grooves being arranged alternately to each other along the direction of the axial line of the shank portion, and
wherein the large number of nails are welded and connected to the metal wire through intermediation of the plurality of vertical ribs of the vertical rib portion.

9. A connecting body for nails according to claim 8,
wherein the plurality of vertical grooves of the vertical rib portion comprise:
shallow first vertical grooves; and
deep second vertical grooves that are deeper than the shallow first vertical grooves,
the shallow first vertical grooves and the deep second vertical grooves being arranged alternately to each other circumferentially over an entire outer circumference of the shank portion, and
wherein a pitch between the plurality of vertical ribs is set to 1/3 or less of a length (L) of the welded portion in an axial direction of the metal wire over an entire circumference of the shank portion.

10. A connecting body for nails according to claim 8 or 9,
wherein depths of deepest vertical grooves out of the plurality of vertical grooves at the welded portion are each set to be 1/3 times to 1 time as large as a thickness (V) of the welded portion over the entire outer circumference of the shank portion of the each of the large number of nails, and
wherein a pitch between the deepest vertical grooves out of the plurality of vertical grooves is set to 1/2 or less of the length (L) of the welded portion in the direction of an axial line of the metal wire over the entire circumference of the shank portion.
